# EUROPEAN PATENT APPLICATION

(11) **EP 2 657 027 A1**
(43) Date of publication of application: **30.10.2013**
(21) Application number: 12425080.4
(22) Date of filing: 27.04.2012
(51) Int. Cl.: B41F 31/00, B41J 2/00, B41J 2/195, G05D 24/00, B41J 2/175, G05D 24/02, G01N 11/00

(54) **Agitator and viscometer assembly**

(71) Applicant: BOBST ITALIA S.P.A., 29121 Piacenza (PC) (IT)
(72) Inventor: Melotti, Renzo, 15030 Sala Monferrato (Alessandria) (IT)
(74) Representative: Porsia, Attilio

(57) **Abstract**

Agitator and viscometer assembly, suitable for use in printing unit, such as rotogravure printing unit, in particular for measuring ink viscosity in an ink preparing phase and/or in an ink filling up phase on board of the printing unit and mountable in the printing unit to verify and maintain ink viscosity inside inking plant; the assembly comprises a main tubular body (1) provided at one end with at least a shaking helix (13) and a viscometer sensor (12) independent one from another and on the other end with a command group (2) in which a motor (18) is located; the motor (18) is able to put in rotation a transmission shaft positioned inside said main tubular body (1) and connectable to said shaking helix (13); the tubular body (1) communicates with at least a dilution fluid adding conduct (8) and comprises an housing for locating the viscometer sensor (12) and for electrically connecting it to the command group (2).

## Description

### Technical Field

The present invention relates to an agitator and viscometer assembly, suitable for use in printing units, such as rotogravure printing unit, in particular for measuring ink viscosity in an ink preparing phase and/or in an ink filling up phase on board of the printing unit and mountable in the printing unit to verify and maintain ink viscosity inside inking plant.

### Background Art

Ink viscosity in rotogravure industry is an important parameter that guarantees a constant and high printing quality. Viscosity is generally measured in three particular phase of working cycle. A first measure is taken in an ink preparing phase in the "ink kitchen", afterwards a second measure is taken in an ink tank on board the machine, as little variation of temperature from ink kitchen to the machine can cause substantial changes in viscosity. At least a viscometer is mounted in machine to verify and maintain viscosity inside inking plant.

Measuring systems at now are manifold. These systems can be electrical or mechanical systems. Typical electrical systems are for example rotational viscometers, which measure electrical consumption of an engine that puts in rotation a disc or a cylinder with constant angular velocity and immersed in the fluid to be measured, falling ball viscometers, which measure the time required to a sphere immersed in a sample fluid, for crossing a known distance, and vibrational viscometers, which measure amplitude variation of vibration of a membrane immersed in a fluid. A typical mechanical system is for example a cup in which how many seconds need a fluid inside the cup to get out of an orifice are measured.

Every described measure system is indirect, in fact, they measure a magnitude that is linked to a certain value of viscosity at a later time. This value is expressed in centipois or seconds needed to drain the cup.

Usually instruments changes according to the phase in which the measure is carried out, for example the ink preparing phase or the ink filling up phase on board of the printing unit, so results will be related by converting table.

Moreover, ink in said phases is shaked by an agitator as in quiet it has tendency to separate itself, not making the sample considered for the measurement meaningful of the total.

### Disclosure of Invention

The purpose of the present invention is the realization of an agitator and viscometer assembly suitable for use in printing unit, such as rotogravure printing unit, in particular for measuring ink viscosity in an ink preparing phase and/or in an ink filling up phase on board of the printing unit and mountable in the printing unit to verify and maintain ink viscosity inside inking plant, and by which it is possible:
- speed up ink preparing phase in ink kitchen abandoning use of cup;
- get coherent viscosity values for each phase of measure inside the process, that is for example in preparation phase and in filling up phase;
- rectify viscosity in short time thanks to an automatic system of shake/measure/solvent addition, or manually solvent addition.

This purpose is achieved by the present invention by means of an agitator and viscometer assembly according to the combination of features claimed in claim 1.

Further advantageous features of the assembly according to the present invention have been specified in the dependent claims.

Advantageously, the present agitator and viscometer assembly allows to measure the ink viscosity and to shake ink with only one instrument and so ink preparing times are shortly.

Moreover, as the present system is used for measuring ink viscosity in an ink preparing phase, in an ink filling up phase on board of the printing unit and is mounted in the printing unit to verify and maintain ink viscosity inside inking plant, viscosity values detected from a sensor in a phase will be coherent with values detected from the same sensor used in another phase. Every reading value is simply comparable with the others and operator will not have to use any comparing tables.

Furthermore, operator can manually do rapid ink adding if the ink viscosity of the is far from desired condition. Differently it is possible to start an automatic cycle of reading and correction commanded by the typical Programmable Logic Controller (PLC) of the printing unit before ink pumping.

Further characteristics and advantages of the present invention will be more apparent from the following description of a preferred embodiment thereof, illustrated only by way of non limitative example in the enclosed figures.

### Brief description of figures

Fig. 1 shows an isometric view of an agitator and viscometer assembly according to the present invention;
Fig. 2 shows an isometric exploded view of various parts forming the present agitator and viscometer assembly.
Fig. 3 shows on a larger scale a partial longitudinal section of the upper part of the present agitator and viscometer assembly.
Fig. 4 shows on a larger scale a partial longitudinal section of the lower part of the present agitator and viscometer assembly.

### Best Mode For Carrying Out the Invention

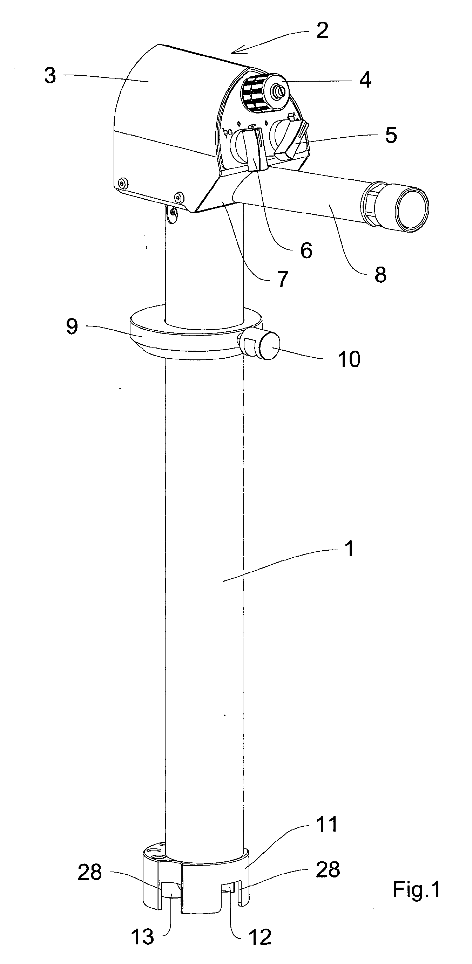

With reference to the annexed drawings and in particular to Fig. 1, the agitator and viscometer assembly according the present invention comprises: a central tubular body 1 having on its upper part a command group 2, provided with a carter 3, a rotatable knob 4 and two selectors 5 and 6. The carter 3 is screwed to a support element 7 from which a conduct 8 for introduction of some solvent departs. Said conduct 8 will be connected upstream to proper means for stocking and supplying solvent. A sliding flange 9 is mountable at any height of the central body 1, for rendering the present assembly suitable to use with any ink tank provided on board of a normal printing unit. A properly shaped support element 10 allows to fix the assembly to the side wall of the ink tank. The central body 1 is connected on its lower part to a protection cylindrical group 11 in which a viscosity sensor 12 and an shaking helix 13 are located. The cylindrical group 11 is provided on its side wall with apertures 28 and is open on the side opposite to the side of fixing to the central body 1.

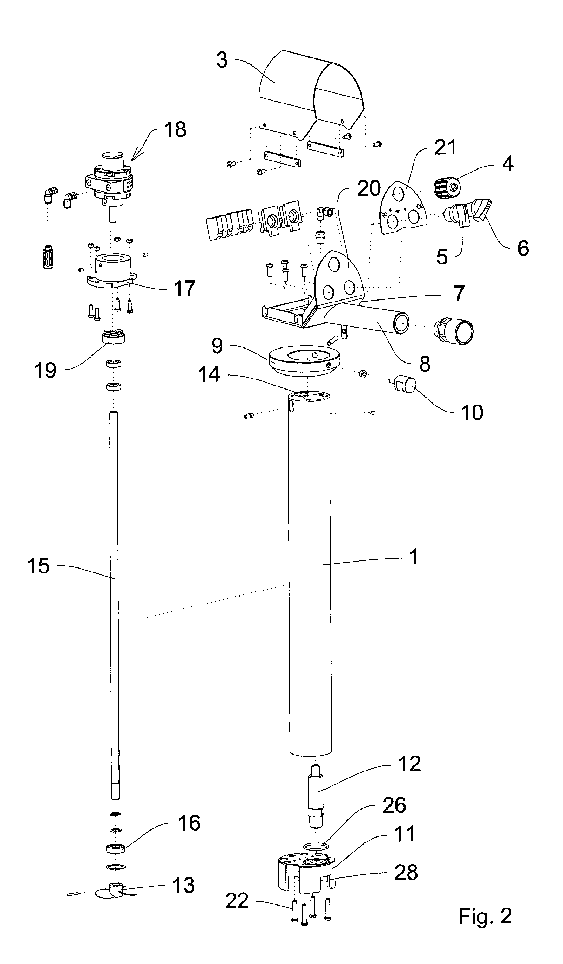

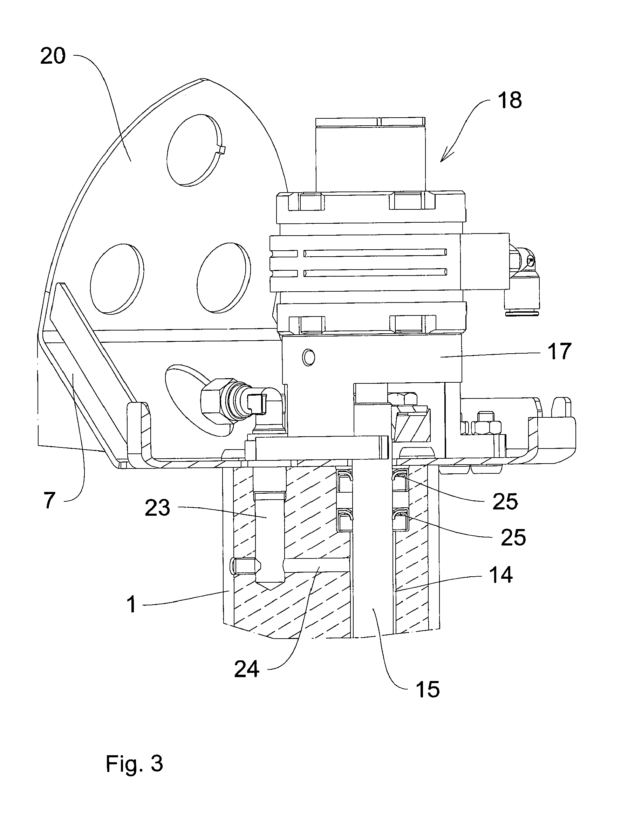

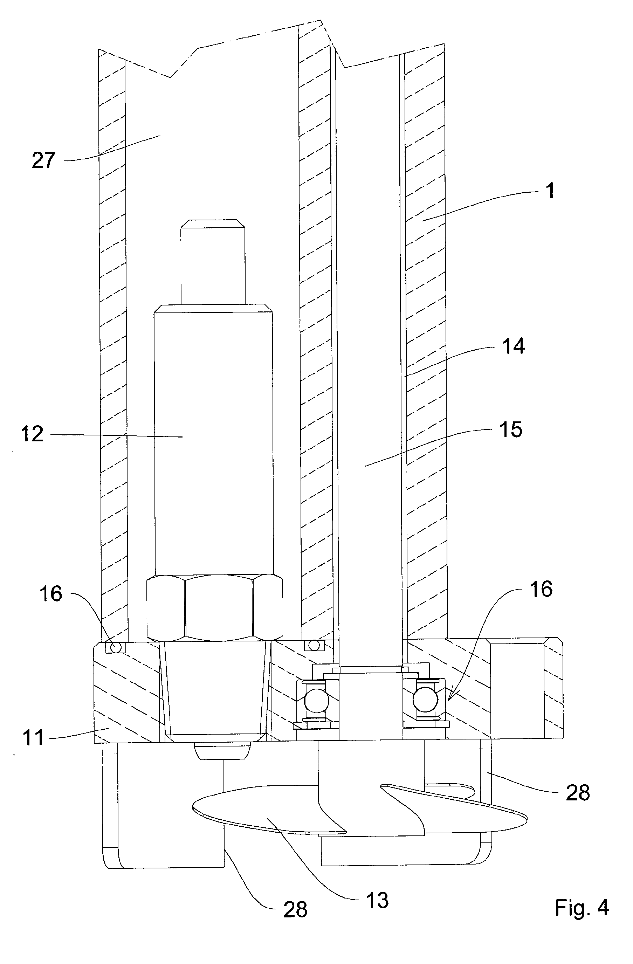

The tubular body 1, see also Fig. 2, 3 and 4, comprises inside a longitudinal channel 14 for housing a transmission shaft 15 on the bottom end of which the helix 13 is pinned. The transmission shaft 15 is supported in the protection cylindrical group 11 by means of a first radial spheres bearing 16. A flange 17 can be connected to the support element 7 and a pneumatic motor 18 is housed on said flange 17. The support element 7 comprises a plate 20 on which a corresponding informative label 21 for the operator is located. The upper end of the transmission shaft 15 is connected by means of a locking assembly 19 to the pneumatic motor 18. A second radial spheres bearing is located in the pneumatic motor 18. The longitudinal channel 14 also allows the introduction of clear solvent coming from the conduct 8 and used for ink dilution or for the cleanness of the helix 13. The solvent passes through suitable passages 23 and 24 realized inside the central body 1 and reaches the channel 14, under two seals 25 located on the upper part of channel 14 and through which the transmission shaft 15 passes. The seals 25 are used for avoiding any accidental escape of solvent in the command group direction, in which various electric components and connections, not shown, will be located. Said electric components and connections and said motor 18 are protected by means of the carter 3 screwed to the support element 7. The solvent coming from said passages 23 and 24 passes therefore along the channel 14 and reaches the ink tank, in which the helix 13, the sensor 12 and the protection group 11 will be located. The protection group 11 is fixed to the central body by means of screws 22 and the viscometer sensor 12 is screwed on said protection group 11. The viscometer sensor 12 is positioned inside a longitudinal housing 27 realized in the central body 1 and able to allow electric connection, not shown, of said sensor 12 with the command group 2 of fig. 1, which group 2 will cooperate with normal means for reading the ink viscosity. Said protection group 11 is provided with an O-ring seal 26 used for protecting the sensor 12 from accidental solvent infiltrations from the channel 14. Advantageously, the helix 13 is positioned at least partially under the viscometer sensor 12, which could be a membrane sensor, and at a certain distance from it. Said reciprocal position of the helix 13 and the sensor 12 is provided for generating turbulence near the sensor 12, thus optimizing viscosity measure conditions.

In operation, the present assembly is fixed by means of the element 10 to an ink tank, by regulating the height of the flange 9 along the central body as a function of the height of the ink tank. The present assembly can also cooperate, by means of proper electric and electronic connections, with a Programmable Logic Controller (PLC) of a printing unit. By means of the selectors 5 and 6 provided on the command group 2 the system can be started such that the pneumatic motor 18 puts in rotation the transmission shaft 15 and therefore the shaking helix 13 and such that the sensor 12 can detect the ink viscosity. The operator can adjust the rotation speed of the helix 13 by means of the knob 4. The selector 6 is a three way selector characterized by: a first off position, a second position in which the operator can set a shaking mode, in which the helix is put in rotation; and a third position in which an automatic cycle of shaking-viscosity measurement-correction can be activated. Said automatic cycle substantially allows to correct automatically ink viscosity by adding solvent as a function of the viscosity value detected from the sensor 12. In this case means for supply solvent from conduct 8 will be automatically activated such that a proper quantity of solvent is automatically introduced in the channel 14. The selector 5 is a two way selector characterized by: a first off position and a second position which allows the operator to add manually some solvent coming from the conduct 8, in a case, for example, the operator has selected the shaking mode on the first selector 6.

Advantageously, the present agitator and viscometer assembly can be used in the preparing phase in ink kitchen, thus abandoning use of the traditional cup and/or mounted on an ink tank of a printing unit. If the present system is used in the ink preparing phase and in the ink tank of printing unit, viscosity values detected and read in the ink preparing phase will be coherent with values detected and read in the printing unit, in case of ink addiction also. Every viscosity reading is simply comparable with others and the operator will not have to use comparing tables. Moreover, if the viscosity of the solvent and ink mixture in the tank is far from the desired condition, the operator can add rapidly some solvent by means of the selector 5. Differently, it is also possible, as above described, to start, by means of the selector 6, an automatic cycle of viscosity reading and correction in cooperation with the Programmable Logic Controller (PLC) of the printing unit, preferably before adding ink in the relative tank of the printing unit.

## Claims

1. Agitator and viscometer assembly, suitable for use in printing unit, such as rotogravure printing unit, in particular for measuring ink viscosity in an ink preparing phase and/or in an ink filling up phase on board of the printing unit and mountable in the printing unit to verify and maintain ink viscosity inside inking plant, **characterized in that** it comprises a main tubular body (1) provided at one end with at least a shaking helix (13) and a viscometer sensor (12) independent one from another and on the other end with a command group (2) in which a motor (18) is located, said motor (18) being able to put in rotation a transmission shaft (15) positioned inside said main tubular body (1) and connectable to said shaking helix (13), said tubular body (1) being communicating with at least a dilution fluid adding conduct (8) and comprising an housing (27) for locating said viscometer sensor (12) and for electrically connecting it to said command group (2).

2. Agitator and viscometer assembly according to claim 1, **characterized in that** the viscometer sensor (12) and the shaking helix (13) are positioned in a protection support (11) fixed on the end of the tubular body (1).

3. Agitator and viscometer assembly according to claim 1, **characterized in that** the body (1) comprises a longitudinal channel (14) in which said transmission shaft (15) is located, said channel (14) being able to allow dilution fluid transfer from said conduct (8).

4. Agitator and viscometer assembly according to claim 1, **characterized in that** the command group (2) comprises at least a knob (4) for regulation of the helix speed rotation.

5. Agitator and viscometer assembly according to claim 1, **characterized in that** the command group (2) comprises at least a three way selector (6) provided with a first off position, a second position in which the operator can set a shaking mode and a third position in which an automatic cycle of shaking-viscosity measurement-correction can be activated.

6. Agitator and viscometer assembly according to claim 1, **characterized in that** the command group (2) comprises at least a two way selector (5) provided with a first off position and a second position which allows the operator to manually add dilution fluid.

7. Agitator and viscometer assembly according to claim 1, **characterized in that** it comprises a flange (9) mountable at any height along the body (1), said flange (9) being provided with means (10) for fixing the body (1) to any ink tank of a printing unit.

8. Agitator and viscometer assembly according to claim 1, **characterized in that** the helix (13) is positioned at least partially under the viscometer sensor (12) and at a certain distance from it.

9. Agitator and viscometer assembly according to claim 1, **characterized in that** said command group comprises a properly shaped support element (7) and a flange (17) connectable to it, said motor (18) being supported by said flange and covered by a carter (3) fixed to said support element (7).

10. Agitator and viscometer assembly according to claim 2, **characterized in that** said protection group (11) is provided with sealing means (26) for protecting the sensor (12) from accidental dilution fluid infiltrations.
